# EUROPÄISCHE PATENTSCHRIFT

(11) **EP 3 161 351 B1**
(45) Veröffentlichungstag und Bekanntmachung des Hinweises auf die Patenterteilung: **19.09.2018**
(21) Anmeldenummer: 15729076.8
(22) Anmeldetag: 03.06.2015
(51) Int. Cl.: F16H 57/02

(54) **ANTRIEB**
DRIVE
ENTRAÎNEMENT

(30) Priorität: 27.06.2014 DE 102014009317
(43) Veröffentlichungstag der Anmeldung: 03.05.2017
(73) Patentinhaber: Sew-Eurodrive GmbH & Co. KG, 76646 Bruchsal (DE)
(72) Erfinder: KERSCHBAUM, Martin, 76139 Karlsruhe (DE); MORITZ, Thorsten, 76698 Ubstadt-Weiher (DE)
(86) Internationale Anmeldenummer: PCT/EP2015/001131
(87) Internationale Veröffentlichungsnummer: WO 2015/197158

(56) Entgegenhaltungen:
- EP-A1- 0 642 207
- DE-A1- 2 213 731
- DE-A1- 4 102 932
- DE-A1-102008 044 959
- US-A- 5 202 597

## Beschreibung

Die Erfindung betrifft einen Antrieb.
Es ist allgemein bekannt, dass ein Antrieb einen Elektromotor aufweist, der ein Getriebe antreibt und von einer Elektronik, insbesondere Wechselrichter, speisbar ist.
Aus der US 5 202 597 A ist ein Motor mit abbremsender Vorrichtung bekannt.
Aus der DE 41 02 932 A1 ist ein Getriebemotor bekannt.
Aus der DE 22 13 731 A1 ist als nächstliegender Stand der Technik eine Zentrifugalpumpe bekannt.
Aus der EP 0 642 207 A1 ist ein Getriebemotor bekannt.
Aus der DE 10 2008 044 959 A1 ist ein Kompaktantrieb bekannt.

Der Erfindung liegt daher die Aufgabe zugrunde, einen Antrieb weiterzubilden, wobei eine möglichst hohe Antriebsleistung auf möglichst kleinem Bauraum vorsehbar sein soll.
Erfindungsgemäß wird die Aufgabe bei dem Antrieb nach den in Anspruch 1 angegebenen Merkmalen gelöst.
Wichtige Merkmale der Erfindung bei dem Antrieb sind, dass der Antrieb ein von einem Elektromotor angetriebenes Getriebe aufweist,
wobei das Getriebe ein Getriebegehäuse aufweist, in welchem eine abtreibende Welle drehbar gelagert ist, und ein Verzahnungsteil, welches mit der abtreibenden Welle drehfest
verbunden ist, aufweist, insbesondere wobei das Verzahnungsteil im vom Getriebegehäuse umgebenen Innenraum angeordnet ist,
wobei der Elektromotor ein Motorgehäuse aufweist,
wobei das Motorgehäuse an der eintreibenden Seite des Getriebegehäuses mit dem Getriebegehäuse verbunden ist und somit eine Öffnung des Getriebegehäuses verschließt,
wobei die Öffnung einen lichten Durchmesserwert aufweist, welcher den größten Durchmesserwert des Verzahnungsteils übertrifft.

Von Vorteil ist dabei, dass die eintreibende Öffnung des Getriebes die Montageöffnung ist und außerdem als Zentrierung für den Motor verwendbar ist. Somit ist eine einfache Montage ermöglicht und die Montageöffnung dicht verschließbar mittels des Motors. Ein Getriebedeckel, welcher die Montageöffnung des Getriebes verschließt, ist somit nicht notwendig. Somit ist das Getriebegehäuse einstückig als Gussteil ausführbar.

Da der Getriebedeckel einsparbar ist, ist eine geringe Teileanzahl für die Herstellung des Antriebs notwendig und schon von daher eine einfache Herstellung erreicht.

Bei einer vorteilhaften Ausgestaltung ist die Öffnung die Montageöffnung des Getriebes, insbesondere also das Verzahnungsteil bei der Herstellung durch die Öffnung eingeführt ist. Von Vorteil ist dabei, dass ein Getriebedeckel verzichtbar ist.

Bei einer vorteilhaften Ausgestaltung sind das Getriebegehäuse und das Motorgehäuse dicht, insbesondere öldicht, verbunden,
insbesondere wobei die Rotorwelle des Motors drehfest mit einem eintreibenden Verzahnungsteil verbunden ist und mittels eines Wellendichtrings zum Motorgehäuse hin abgedichtet ausgeführt ist, insbesondere wobei die Rotorwelle im Motorgehäuse gelagert ist. Von Vorteil ist dabei, dass ein direkter Anbau des Getriebes an den Motor ermöglicht ist. Somit ist die Rotorwelle des Motors eintreibende Welle des Getriebes und drehfest mit demjenigen Verzahnungsteil des Getriebes verbunden, welches der ersten Getriebestufe,
insbesondere der eintreibenden Getriebestufe, zugeordnet ist. Dieses Verzahnungsteil ist drehfest mit der Rotorwelle verbunden. Die Rotorwelle selbst wiederum ist im Motorgehäuse gelagert. Die Zentrierung des Motorgehäuses zum Getriebegehäuse zentriert also das eintreibende Verzahnungsteil zu dem mit ihm im Eingriff stehenden Verzahnungsteil der eintreibenden Getriebestufe.

Bei einer vorteilhaften Ausgestaltung weist das Motorgehäuse einen Zentrierbund auf, welcher am Rand der Öffnung des Getriebegehäuses zentriert ist. Von Vorteil ist dabei, dass eine einfache Zentrierung ausführbar ist, die das Motorgehäuse zum Getriebegehäuse zentriert und somit auch das eintreibende Verzahnungsteil, welches drehfest mit der Rotorwelle verbunden ist, zum mit ihm in Eingriff stehenden Verzahnungsteil der ersten, also eintreibenden, Getriebestufe.

Bei einer vorteilhaften Ausgestaltung weist der Antrieb eine Signalelektronik und eine Leistungselektronik auf,
wobei der Elektromotor einen Rotor aufweist, mit dem ein Lüfter drehfest verbunden ist,
**wobei** der vom Lüfter angesaugte Luftstrom zumindest auch die Leistungselektronik kühlt, insbesondere im Ansaugbereich.

Von Vorteil ist dabei, dass von einem Luftstrom alle drei Antriebskomponenten, wie Getriebe, Motor und Elektronik entwärmbar ist. Insbesondere ist vom angesaugten Luftstrom die Elektronik und vom vom Lüfter geförderten Luftstrom der Motor und vom ausgestoßenen Luftstrom das Getriebe kühlbar. Auf diese Weise ist eine effektive Kühlung erreichbar.

Bei einer vorteilhaften Ausgestaltung ist der Elektromotor zwischen dem Getriebe und der Leistungselektronik, insbesondere das Motorgehäuse des Elektromotors zwischen dem Getriebegehäuse und einem Gehäuseteil der Leistungselektronik, angeordnet,
wobei der angesaugte Luftstrom zumindest abschnittsweise in Querrichtung zur Verbindungsrichtung des Getriebes und der Leistungselektronik verläuft entlang von Kühlrippen, insbesondere entlang der Erstreckungsrichtung von Kühlrippen, die am die Leitungselektronik zumindest teilweise gehäusebildend umgebenden Gehäuseabschnitt eines Gehäuseteils ausgeformt sind. Von Vorteil ist dabei, dass eine sehr kompakte Anordnung erreichbar ist und der angesaugte Luftstrom aus der Querrichtung durch einen Schlitz hindurch ansaugbar ist, wobei der Schlitz als Lufteinströmöffnung ausführbar ist, die zum Gehäuseteil der Leistungselektronik hin mittels an diesem Gehäuseteil ausgebildeten Kühlrippen begrenzt ist. Auf diese Weise nimmt die eingesaugte Luft schon Wärme der Elektronik auf und die geförderte Luft

Wichtige Merkmale bei dem Antrieb nach Anspruch 3 sind, dass der Antrieb ein von einem Elektromotor angetriebenes Getriebe, eine Signalelektronik und eine Leistungselektronik aufweist,
wobei der Elektromotor einen Rotor aufweist, mit dem ein Lüfter drehfest verbunden ist,
**wobei** ein Gehäuseteil des Antriebs einen Jochabschnitt, einen ersten Gehäuseabschnitt und einen zweiten Gehäuseabschnitt aufweist,
wobei der erste Gehäuseabschnitt vom zweiten Gehäuseabschnitt beabstandet ist und der Jochabschnitt mit dem ersten Gehäuseabschnitt verbunden ist und mit dem zweiten Gehäuseabschnitt derart verbunden ist, dass der zwischen erstem und zweitem Gehäuseabschnitt angeordnete Zwischenbereich in die Umgebungsluft mündet,
insbesondere wobei das Gehäuseteil, umfassend den Jochabschnitt, den ersten und den zweiten Gehäuseabschnitt, einteilig, insbesondere einstückig, ausgeführt ist,
wobei der erste Gehäuseabschnitt einen Lüfter zumindest teilweise gehäusebildend umgibt,
wobei der erste Gehäuseabschnitt eine als Einström-Öffnung, insbesondere für einen vom Lüfter angesaugten axialen Luftstrom, ausgebildete, durch die Wandung des Gehäuseabschnitts durchgehende Ausnehmung aufweist, die in den Zwischenbereich mündet.

Von Vorteil ist dabei, dass der erste Gehäuseabschnitt den Lüfterraumbereich, also auch den Lüfter, zumindest teilweise begrenzt und der zweite Gehäuseabschnitt die Leistungselektronik. Durch die Beabstandung ist auch eine thermische gegenseitige Beeinflussung vermieden oder zumindest verringert. Durch den verbindenden Jochabschnitt ist es ermöglicht, den Anschlussbereich für Versorgungsleitungen in Querrichtung zur Verbindungslinie von Getriebe und Leistungselektronik unter Verwendung von geringem Bauraum anzubringen. Denn auf dem Jochabschnitt ist ein Aufnahmeteil mit aufgenommener Signalelektronik aufnehmbar. Somit ist also eine Ansaugung der Luft in Querrichtung zur Verbindungrichtung von Leistungselektronik und Getriebe ausführbar und somit eine sehr kompakte Anordnung erzielbar, da die Kühlung des Getriebemotors samt Elektronik mittels des Kühlkanals ausführbar ist.

Bei einer vorteilhaften Ausgestaltung kühlt der vom Lüfter angesaugte Luftstrom zumindest die Leistungselektronik. Von Vorteil ist dabei, dass der Ansaugbereich des Luftstroms Wärme der Elektronik aufnimmt. Somit wird hier der Luftdruck nicht erhöht zur Wärmeaufnahme sondern tendenziell erniedrigt. Auf diese Weise ist auch das Gehäuseteil mit geringerer Wandstärke oder höherer Undichtigkeit ausführbar. Außerdem ist ein sicherer Abtransport der Wärme erreichbar. Denn es sind quaisstationär auftretende Wirbel in einfacher Weise vermeidbar und somit ein effektiver Wärmeabtransport erreichbar.

Bei einer vorteilhaften Ausgestaltung weist der zweite Gehäuseabschnitt Kühlrippen auf, die sich zumindest abschnittsweise parallel zum vom Lüfter angesaugten, einströmenden Luftstrom erstrecken und/oder die an der dem ersten Gehäuseabschnitt gegenüber liegend angeordneten Seite angeordnet sind. Von Vorteil ist dabei, dass eine effektive Entwärmung erreichbar ist.

Bei einer vorteilhaften Ausgestaltung weist der Jochabschnitt eine, zwei oder mehrere durchgehende, in den Zwischenbereich mündende Ausnehmungen auf. Von Vorteil ist dabei, dass nicht nur die Luftzufuhr zum Lüfter hin verbesserbar ist sondern auch eine Entwässerung für jede Montagerichtung erreichbar ist.

Bei einer vorteilhaften Ausgestaltung ist auf der vom ersten und zweiten Gehäuseabschnitt abgewandten Seite des Jochabschnitts ein Aufnahmeteil mit dem Jochabschnitt verbunden, welches eine insbesondere in einem Kunststoffgehäuse angeordnete Signalelektronik aufnimmt. Von Vorteil ist dabei, dass möglichst nahe bei der Leistungselektronik aber auf anderem Temperaturniveau, insbesondere durch den mittels des Aufnahmeteils und des Kunststoffgehäuses der Signalelektronik bewirkten Wärmeübergangswiderstand.

Bei einer vorteilhaften Ausgestaltung weist das Motorgehäuse zumindest einen Kühlkanal auf, insbesondere der vom Lüfterraumbereich zum Getriebe hin durchgeht,
wobei der Kühlkanal zumindest abschnittsweise von einem Abdeckteil begrenzt ist. Von Vorteil ist dabei, dass Masse und Gewicht einsparbarsind. Denn das Abdeckteil ist aus Kunststoff herstellbar und ist außerdem in der Lage, einen luftbefüllten Kühlbereich zu begrenzen, so dass kein Stahl hierzu notwendig ist.

Bei einer vorteilhaften Ausgestaltung ist das Motorgehäuse aus Metall und das Abdeckteil aus Kunststoff gefertigt,
insbesondere wobei das Abdeckteil klipsverbunden mit dem Motorgehäuse ist. Von Vorteil ist dabei, dass eine einfache Herstellung ausführbar ist.

Bei einer vorteilhaften Ausgestaltung führt der Kühlkanal durch einen Flanschabschnitt des Motorgehäuses axial hindurch in einen Kühlbereich, insbesondere in eine Kühltasche, der vom Abdeckteil begrenzt ist,
wobei der Flanschabschnitt mit einem entsprechenden Flanschabschnitt des ersten Gehäuseabschnitts verbunden ist, insbesondere schraubverbunden ist. Von Vorteil ist dabei, dass der Flanschabschnitt eine bezüglich Stabilität verbesserte Verbindung herstellbar ist.

Bei einer vorteilhaften Ausgestaltung führt der Kühlkanal durch einen weiteren Flanschabschnitt des Motorgehäuses, insbesondere in axialer Richtung, wobei der vom Kühlkanal austretende Luftstrom auf die äußere Oberfläche des Getriebes gerichtet ist,
wobei der weitere Flanschabschnitt des Motorgehäuses mit einem entsprechenden Flanschabschnitt des Getriebegehäuses verbunden ist, insbesondere schraubverbunden ist,
wobei der Kühlkanal insbesondere axial durch den entsprechenden Flanschabschnitt des Getriebegehäuses geführt ist. Von Vorteil ist dabei, dass eine effektivere Kühlung erreichbar ist.

Bei einer vorteilhaften Ausgestaltung ist das Aufnahmeteil mit dem Jochabschnitt klipsverbunden, wobei das Aufnahmeteil aus Metall und der Jochabschnitt aus Metall gefertigt ist. Von Vorteil ist dabei, dass zwei metallische Teile in einfacher Weise verbindbar sind und somit eine einfache Herstellung ermöglicht ist. Außerdem ist die Wärme aufspreizbar und somit die Wärmeabfuhr mittels des Aufnahmeteils verbesserbar.

Bei einer vorteilhaften Ausgestaltung ist an der Innenseite des zweiten Gehäuseabschnitts eine Wärmespreizplatte angeordnet, auf der ein Leistungshalbleiter angeordnet ist. Von Vorteil ist dabei, dass die Spitzentemperatur erniedrigbar ist, indem die Wärme mittels der Wärmespreizplatte aufspreizbar ist.

Bei einer vorteilhaften Ausgestaltung sind der Jochabschnitt und das Aufnahmeteil einstückig ausgebildet. Von Vorteil ist dabei, dass die Teilezahl verringerbar ist und somit die Herstellung vereinfachbar ist.

Bei einer vorteilhaften Ausgestaltung sind am Aufnahmeteil eine Verstärkungsrippe und eine Kabelführung ausgeformt und/oder eine Ausnehmung zur Durchführung von elektrischen Leitungen zur Statorwicklung des Stators des Elektromotors. Von Vorteil ist dabei, dass eine erhöhte Stabilität in einfacher Weise mit wenig Aufwand erreichbar ist und eine geformte Kabelführung im Gussteil und somit ohne zusätzlichen Aufwand vorsehbar ist, wobei Material einsparbar ist. Außerdem ist auch die Durchführung der Leitungen zum Stator durch die materialsparende Ausnehmung ausführbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Querschnitt durch einen erfindungsgemäßen Antrieb gezeigt, der ein von einem Elektromotor angetriebenes Getriebe aufweist, wobei der Elektromotor von einem Wechselrichter gespeist wird, wobei der Wechselrichter eine Leistungselektronik und eine Signalelektronik aufweist, wobei die Signalelektronik in einem vorzugsweise metallisch ausgeführten Aufnahmeteil 1 des Antriebs aufgenommen ist.

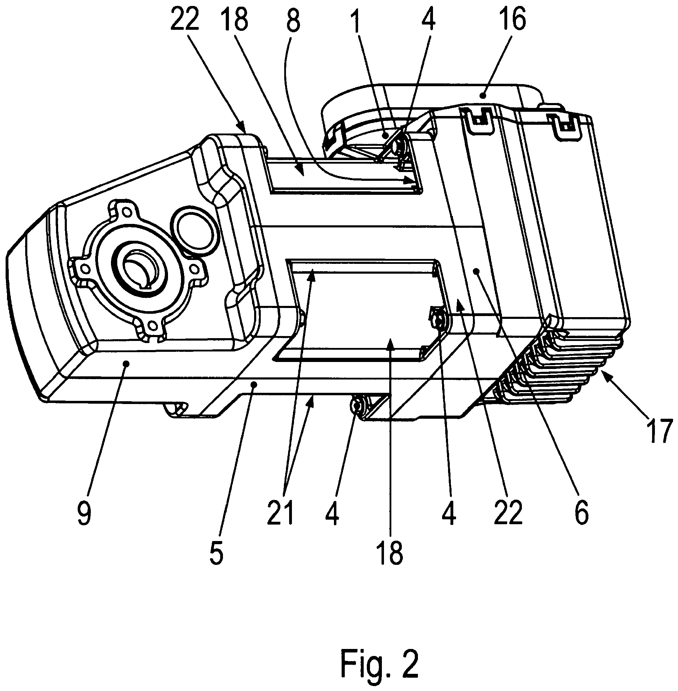

In der Figur 2 ist eine Schrägansicht des Antriebs gezeigt, wobei der Kühlbereich 18 nicht abgedeckt ist.

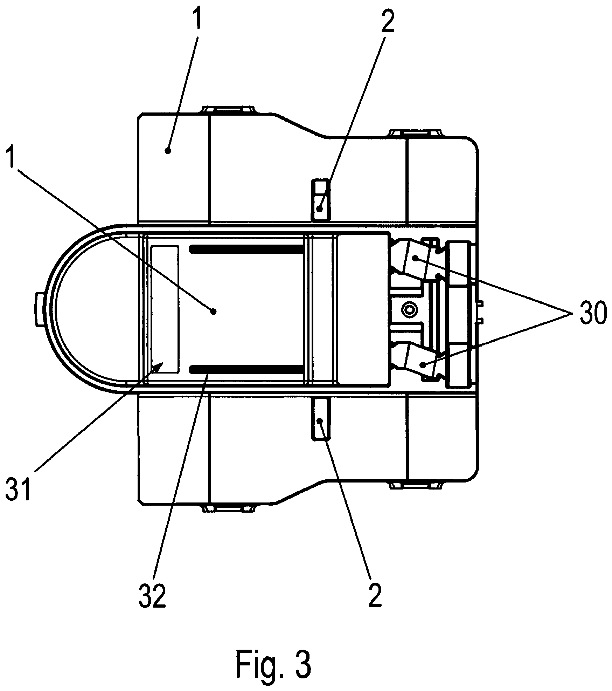

In der Figur 3 ist eine Draufsicht auf das Aufnahmeteil 1 bei entfernter Signalelektronik gezeigt.

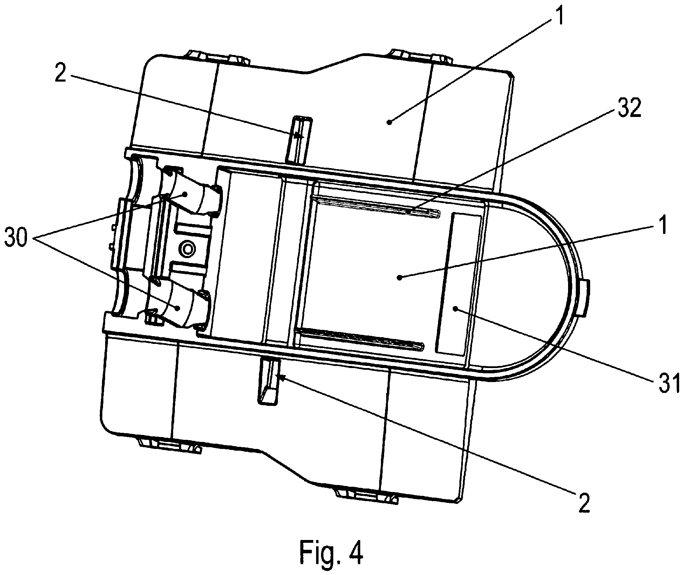

In der Figur 4 ist eine Schrägansicht auf das Aufnahmeteil 1 bei entfernter Signalelektronik gezeigt.

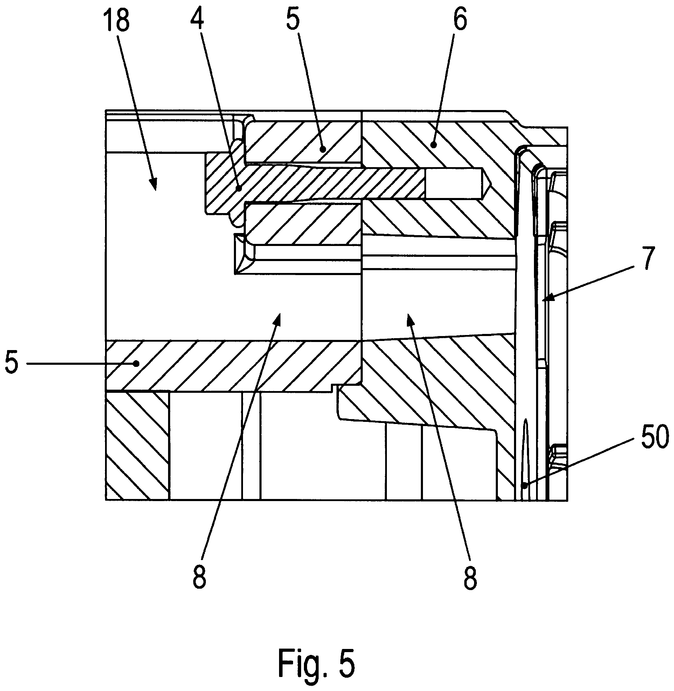

In der Figur 5 ist ein Luftkanal 8 dargestellt, der vom Lüfterraumbereich 19 in den Kühlbereich 18 an der Außenseite des Motorgehäuses 5 führt.

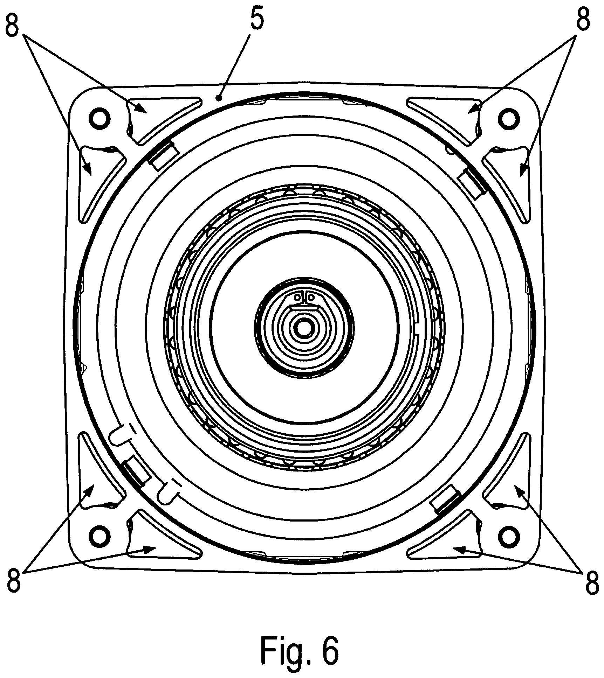

In der Figur 6 ist eine Draufsicht von der Lüfterseite aus auf das Motorgehäuse 5 gezeigt.

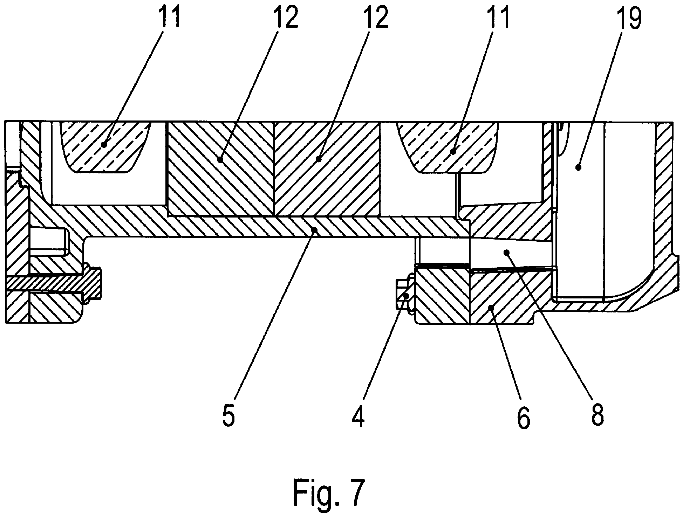

In der Figur 7 ist wiederum der Luftkanal 8 dargestellt, der vom Lüfterraumbereich 19 in den Kühlbereich 18 an der Außenseite des Motorgehäuses 5 führt, wobei das Statorblechpaket 12 und die Statorwicklungen 11 gezeigt sind.
In der Figur 8 ist eine Draufsicht auf den die Leistungselektronik gehäusebildend umgebenden Teil des Gehäuseteils 6 gezeigt, wobei die nicht sichtbare Lufteinlassöffnung 7 vor den Kühlrippen 17, also in Blickrichtung vor den Kühlrippen 17 liegt und der den Lüfterraumbereich 19 gehäusebildend umgebende Teil des Gehäuseteils 6 herausgeschnitten ist.
In Figur 9 ist ein Abdeckteil 90, das vorzugsweise aus Kunststoff gefertigt ist und an dessen Innenseite Turbulatoren 91 ausgeformt sind, gezeigt, das den Kühlbereich 18 abdeckt und somit einen Kühlkanal zwischen Motorgehäuse 5 und Abdeckteil 90 zur Verfügung stellt, wobei die Turbulatoren 91 eine Erhöhung der Turbulenz bewirken und somit einen insgesamt geringeren Wärmeübergangswiderstand zwischen Stator und Umgebungsluft.

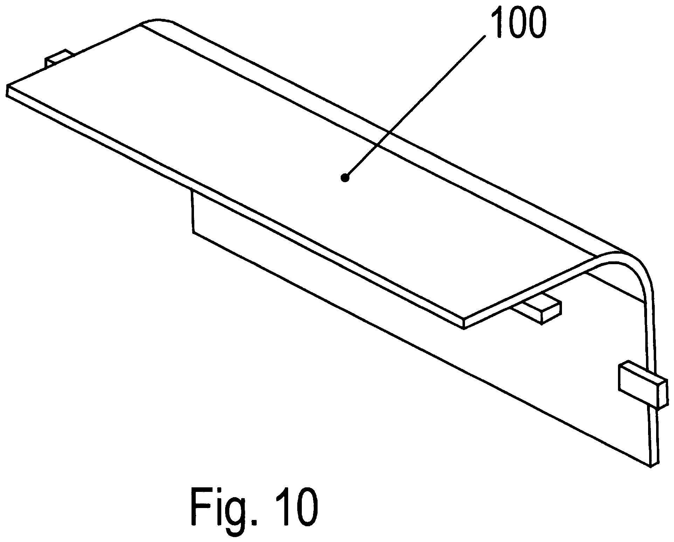

In der Figur 10 ist ein alternativ vorsehbares Abdeckteil 90 gezeigt, das ohne Turbulatoren ausgeführt ist.

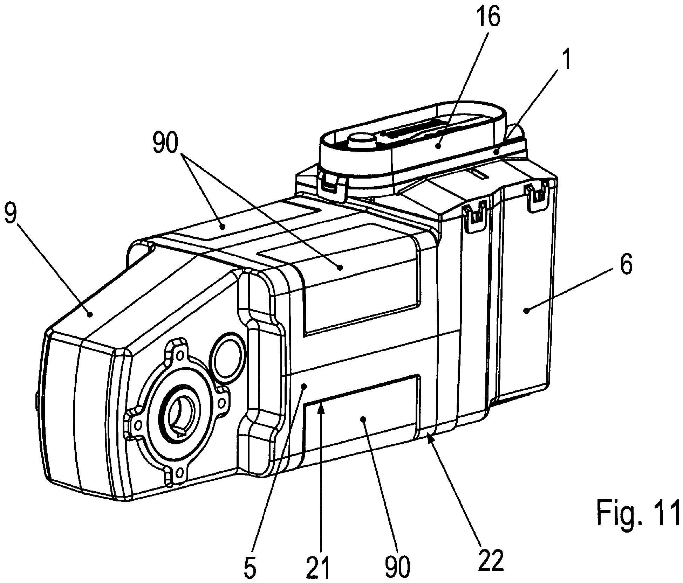

In der Figur 11 ist der Antrieb in Schrägansicht gezeigt, wobei auch im Motorgehäuse ausgebildete Luftaustrittsöffnungen 120 gezeigt sind, aus welchen jeweils ein auf das Getriebegehäuse 9 gerichteter Luftstrom austritt und somit Kühlung bewirkt.

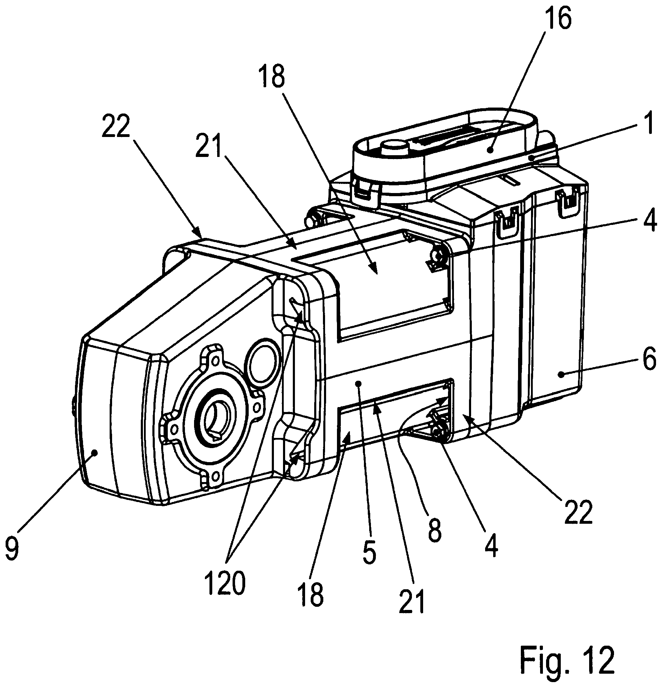

In der Figur 12 ist der Antrieb in Schrägansicht gezeigt, wobei die Abdeckteile 90 ausgeblendet sind.
In der Figur 13 ist nur das Getriebegehäuse 9 in Schrägansicht dargestellt, wobei Wellen und Verzahnteile des Getriebes sowie dessen Schmieröl nicht dargestellt sind.

Wie in den Figuren gezeigt, weist der Antrieb ein Getriebe mit Getriebegehäuse 9 auf, in welchem Lager aufgenommen sind, welche Wellen lagern, die mit Verzahnungsteilen drehfest verbunden sind. Die eintreibende Stufe des Getriebes wird von einem drehfest mit dem Rotor 10 eines Elektromotors verbundenen Verzahnungsteil, insbesondere Ritzel, angetrieben. Der Rotor 10 ist über ein Lager 13 im Motorgehäuse 5 und über ein Lager 3 im Gehäuseteil 6 gelagert, wobei das Getriebegehäuse 9 mit dem Motorgehäuse 5 verbunden ist und das Motorgehäuse 5 mit dem Gehäuseteil 6.

Im Motorgehäuse 5 ist das Statorblechpaket 12 aufgenommen, in welches die Statorwicklung 11 eingezogen ist.

Am vom Getriebe abgewandten Endbereich des Rotors 10 ist ein Lüfter 20 drehfest mit dem Rotor 10 verbunden. Dieser Lüfter 20 saugt einen Luftstrom durch eine runde Öffnung 50 hindurch aus einer Lufteinlassöffnung 7 an.

Dabei überdeckt der Lüfter 20 in radialer Richtung einen größeren Radialabstandsbereich von der Rotorachse ausgehend als die runde Öffnung 50. Die runde Öffnung 50 ist als Ausnehmung in der Wandung des Gehäuseteils 6 ausgeformt und erstreckt sich in allen Umfangswinkeln in radialer Richtung mindestens zehnmal mehr als in axialer Richtung. Somit tritt der angesaugte Luftstrom in den Lüfterraumbereich 19 im Wesentlichen axial aus der Lufteinlassöffnung 7 ein.

Die Lufteinlassöffnung 7 ist derart geformt, dass der Luftstrom im Wesentlichen in einem oder mehreren voneinander beabstandeten Umfangswinkelbereichen aus radialer Richtung eintritt.

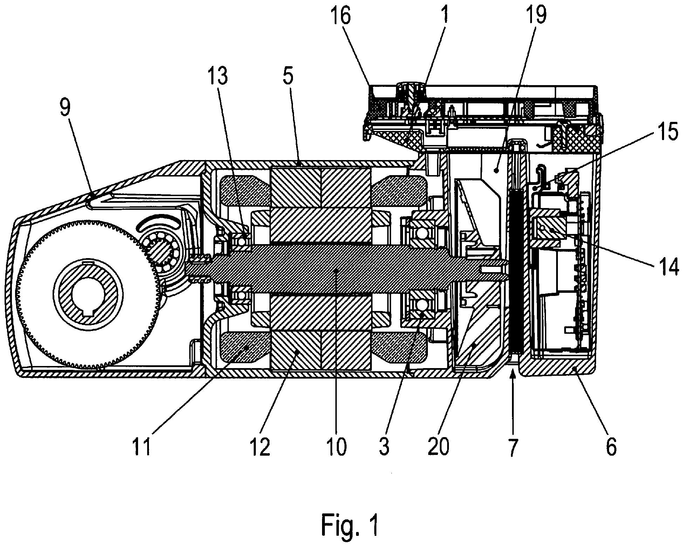

Die Lufteinlassöffnung 7 ist schlitzartig ausgeformt, so dass der Luftstrom in Figur 1 von unten kommend eintritt und entlang der Kühlrippen 17 strömt, welche an demjenigen Bereich des Gehäuseteils 6 angeordnet sind, welcher die Leistungselektronik umgibt.

Der von der Leistungselektronik überdeckte Raumbereich überlappt mit dem vom Lüfter 20 überdeckten Raumbereich.

Das Gehäuseteil 6 weist einen ersten Gehäuseabschnitt auf, der den Lüfterraumbereich 19 gehäusebildend umgibt.

Das Gehäuseteil 6 weist einen zweiten Gehäuseabschnitt auf, der die Leistungselektronik, gehäusebildend umgibt.

Der erste und der zweite Gehäuseabschnitt sind mittels eines Jochabschnitts verbunden, auf den ein Aufnahmeabschnitt aufgesetzt ist.

Der Jochabschnitt, der erste Gehäuseabschnitt und der zweite Gehäuseabschnitt sind einstückig, also einteilig, ausgeführt. Vorzugsweise ist das Gehäuseteil 6 aus Metall, wie Aluminium oder Stahl, ausgeführt.

Der erste und der zweite Gehäuseabschnitt sind axial voneinander beabstandet, so dass die Lufteinlassöffnung 7 gebildet ist. An der dem ersten Gehäuseabschnitt und/oder an dem der Lufteinlassöffnung 7 zugewandten Seite des zweiten Gehäuseabschnitts sind Kühlrippen 17 ausgeformt, so dass die von außen durch die Lufteinlassöffnung 7 einströmende Luft entlang der Kühlrippen 17 strömen muss und somit die Leistungselektronik kühlt.

An der Innenseite des zweiten Gehäuseabschnitts ist eine Wärmespreizplatte 15 angeordnet, die mit dem zweiten Gehäuseabschnitt wärmeleitend verbunden ist. auf der vom Verbindungsbereich zwischen Wärmespreizplatte 15 und zweitem Gehäuseabschnitt abgewandten Seite der Wärmespreizplatte 15 ist zumindest ein Leistungshalbleiter 14 wärmeleitend verbunden. Somit wird die Wärme der Leistungselektronik an die Kühlrippen 17 abgeführt.

Der Jochabschnitt weist zwei Ausnehmungen 2 auf, welche in die Lufteinlassöffnung 7 münden, so dass einerseits auch Luft von der der Lufteinlassöffnung 7 gegenüber liegenden Seite einströmt und somit auch bei jeder Bauform eine Entwässerung erfolgt, da die Lufteinlassöffnung 7 entgegengesetzt zu den Ausnehmungen 2 in die Umgebung mündet.

Das Motorgehäuse 5 ist mit dem Gehäuseteil 6 mittels Schrauben 4 schraubverbunden.

Ein im Wesentlichen axial verlaufender Luftkanal 8 verbindet den Lüfterraumbereich 19 mit dem Kühlbereich 18, so dass der vom Lüfter 20 geförderte Luftstrom durch den Luftkanal in den Lüfterraumbereich 19 einströmt, dort entlang des Motorgehäuses 5 entlang strömt von dort durch eine Luftaustrittsöffnung 120 auf die äußere Oberfläche des Getriebegehäuses 9 auftrifft, so dass der Luftstrom von der Leistungselektronik erzeugte Wärme von den Kühlrippen 17 aufnimmt, vom Stator erzeugte Wärme aufnimmt und schließlich auch vom Getriebe erzeugte Wärme aufnimmt und dann in die Umgebung entweicht.

Vorzugsweise sind die Luftaustrittsöffnungen 120 düsenartig geformt, also in Strömungsrichtung mit verengtem Querschnitt ausgeführt, so dass ein schneller austretender Luftstrom erzeugbar ist.

Auf der vom ersten und zweiten Gehäuseabschnitt abgewandten Seite des Jochabschnitts ist das Aufnahmeteil 1 mit dem Jochabschnitt verbunden. Das Aufnahmeteil 1 ist dabei ebenfalls metallisch ausgeführt. Auf der vom Jochabschnitt und dem ersten sowie dem zweiten Gehäuseabschnitt abgewandten Seite des Aufnahmeteils 1 ist ein Gehäuseteil 16, das vorzugsweise als Kunststoffgehäuseteil ausgeführt ist, und eine Signalelektronik zumindest teilweise gehäusebildend umgibt.

Somit ist auf das Aufnahmeteil 1 ein Bedienteil aufsetzbar, mit welchem die Leistungselektronik ansteuerbar ist.

Im Aufnahmeteil 1 ist eine Kabelführung 30 für Versorgungsleitungen ausgeformt und ein Kabelkanal 31, der die Durchführung von Leitungen zur Statorwicklung ermöglicht. Außerdem sind am Aufnahmeteil 1 Verstärkungsrippen 32 ausgeformt.

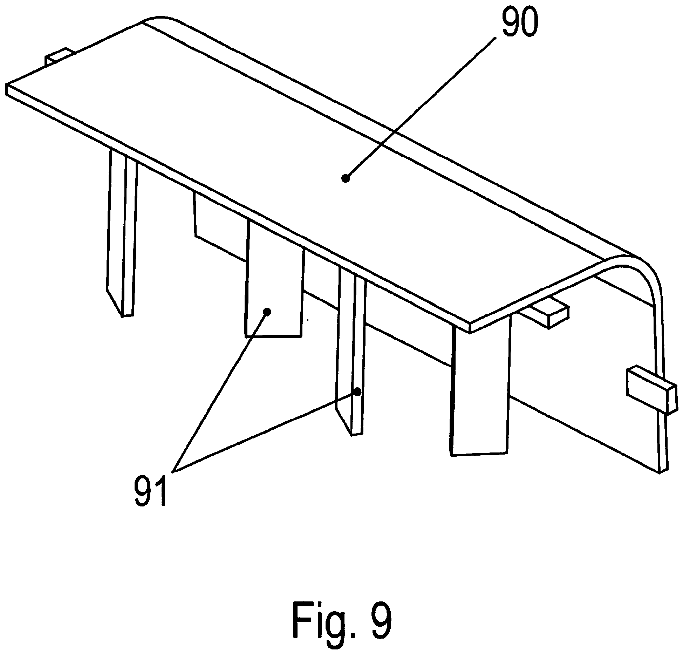

Die Abdeckteile 90 sind vorzugsweise aus Kunststoff als Kunststoffspritzgussteile ausgeführt. Wie in Figur 9 gezeigt ragen die an der Innenseite der Abdeckteile 90 ausgeformten Turbulatoren 91 in den Kühlbereich 18 und verbessern somit die Wärmeabfuhr vom Stator an die Umgebung.

Alternativ sind aber auch Abdeckteile 100 ohne solche Turbulatoren verwendbar.

Beide Sorten von Abdeckteilen (90, 100) werden klipsverbunden mit dem Motorgehäuse 5.

Somit sind vom Luftstrom durchströmbare, vom jeweiligen Abdeckteil (90, 100) zumindest teilweise gehäusebildend umgebene Kühlbereiche 18 als Kanäle vorgesehen.

Wie in den Figuren gezeigt, sind in Umfangsrichtung solche Kühlbereiche regelmäßig voneinander beabstandet.

Getriebe, Motor und Leistungselektronik sind im Wesentlichen koaxial, also in einer Linie angeordnet, wobei der Motor axial zwischen dem Getriebe und der Leistungselektronik angeordnet ist. Die Luftansaugung findet in Querrichtung zu dieser axialen Richtung statt, nämlich über die Lufteinlassöffnung 7 und die Ausnehmungen 2.

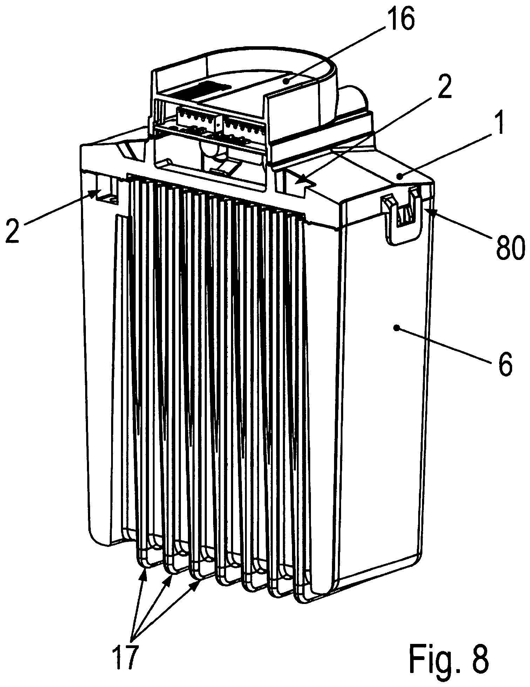

Wie in Figur 8 gezeigt, sind in Umfangsrichtung acht Luftkanäle 8 angeordnet. In jedem der Eckbereiche, die zwischen den Ecken des quaderförmigen Motorgehäuses 5 und dem größten Radialabstand des Statorblechpakets 12 angeordnet sind, sind zwei in Umfangsrichtung voneinander beabstandete Luftkanäle 8 ausgebildet.

Das Getriebegehäuse 9 weist einen stufenförmig nach außen hervor ragenden Flanschbereich auf, in welchem die Schraubverbindung mit dem Motorgehäuse 5 ausgeführt ist.

Die Luftaustrittsöffnungen 120 treten in axialer Richtung durch diese Stufenbereiche hindurch.

Das metallische Aufnahmeteil 1 ist mittels Klipsverbindung 80 mit dem Gehäuseteil 6 verbunden, das ebenfalls metallisch ist.

Die Ausnehmungen 2 münden beidseitig des Gehäuseteils 16 der Signalelektronik. Sie sind also in Querrichtung mittels der Signalelektronik voneinander beabstandet. Dabei ist die Signalelektronik als Bedienteil ausgeführt, also mit Eingabemitteln und Ausgabemitteln.

Zur Verbindung des Gehäuseteils 6 mit dem Motorgehäuse 5 weisen beide jeweils einen Flanschabschnitt auf, durch welche Schraubteile durchführbar sind. Ebenso weisen das Motorgehäuse 5 und das Getriebegehäuse 9 entsprechend ausgeführte Flanschabschnitte auf. Außerdem sind die genannten Flanschabschnitte mit axial durchgehenden Ausnehmungen ausgeführt, die Teile des Kühlkanals vom Lüfterraumbereich 19 durch die Kühlbereiche

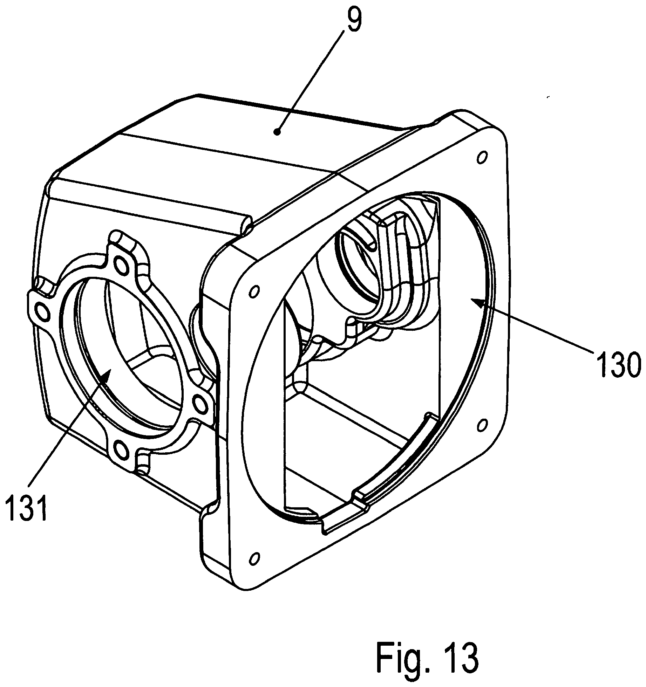

Wie in Figur 13 gezeigt, weist das Getriebegehäuse 9 eine Öffnung 130 auf der eintreibenden Seite auf und eine Öffnung 131 auf der abtreibenden Seite .

Das Motorgehäuse 5 deckt die Öffnung 130 zu, wenn es mit dem Getriebegehäuse 9 verbunden ist. Denn das Motorgehäuse 5 ist an der eintreibenden Seite des Getriebegehäuses 9 mit diesem verbunden. An der abtreibenden Seite ragt die abtreibende Welle des Getriebes durch die Öffnung 131 hindurch zur Umgebung hervor.

Zur Montage des Getriebes wird durch die Öffnung 130 zumindest das abtreibende Verzahnungsteil des Getriebes, also das Verzahnungsteil mit dem größten Durchmesser, in den Innenraum des Getriebegehäuses 9 eingeführt. Die anderen Verzahnungsteile und die Wellen des Getriebes werden entweder durch die Öffnung 130 oder durch die Öffnung 131 in den Innenraum des Getriebes eingeführt.

Daher überschreitet der größte Durchmesser der Öffnung 130 den größten Außendurchmesser des größten Verzahnungsteils des Getriebes. Im fertig gestellten Getriebe ist dieses größte Verzahnungsteil drehfest mit der abtreibenden Welle verbunden.

Die Verbindung zwischen Getriebegehäuse 9 und Motorgehäuse 5 ist öldicht ausgeführt.

Des Weiteren wird das Motorgehäuse 5 mittels eines Zentrierbundes am Rand der Öffnung 130 zentriert.

### Bezugszeichenliste

1 Aufnahmeteil
2 Ausnehmung, insbesondere Ansaugöffnung und Entwässerungsöffnung
3 Lager im Gehäuseteil 6
4 Schraube
5 Motorgehäuse
6 Gehäuseteil für Lüfter und Leistungselektronik
7 Lufteinlassöffnung, insbesondere schlitzartige Lufteinlassöffnung
8 Luftkanal
9 Getriebegehäuse
10 Rotor
11 Statorwicklung
12 Statorblechpaket
13 Lager im Motorgehäuse 5
14 Leistungshalbleiter
15 Wärmespreizplatte
16 Gehäuseteil, insbesondere Kunststoffgehäuseteil für Signalelektronik
17 Kühlrippen
18 Kühlbereich
19 Lüfterraumbereich
20 Lüfter
30 Kabelführung
31 Kabelkanal
32 Verstärkungsrippe
50 Öffnung, insbesondere Bohrung, auf Schrägfläche als Einströmöffnung für Lüfter-Luftstrom
80 Klipsverbindung
90 Abdeckteil
91 Turbulatoren
100 Abdeckteil
120 Luftaustrittsöffnung
130 Öffnung auf der eintreibenden Seite
131 Öffnung auf der abtreibenden Seite

## Patentansprüche

1. Antrieb,
wobei der Antrieb ein von einem Elektromotor angetriebenes Getriebe aufweist,
wobei das Getriebe ein Getriebegehäuse aufweist, in welchem eine abtreibende Welle drehbar gelagert ist, und ein Verzahnungsteil, welches mit der abtreibenden Welle drehfest verbunden ist, aufweist, wobei das Verzahnungsteil im vom Getriebegehäuse umgebenen Innenraum angeordnet ist,
wobei der Elektromotor ein Motorgehäuse (5) aufweist,
wobei das Motorgehäuse (5) an der eintreibenden Seite des Getriebegehäuses mit dem Getriebegehäuse verbunden ist und somit eine Öffnung (131) des Getriebegehäuses verschließt,
wobei die Öffnung (131) die Montageöffnung des Getriebes ist, so dass die Öffnung (131) einen lichten Durchmesserwert aufweist, welcher den größten Durchmesserwert des Verzahnungsteils übertrifft,
wobei der Antrieb eine Signalelektronik und eine Leistungselektronik aufweist,
**dadurch gekennzeichnet, dass**
ein Lüfter (20) mit der Rotorwelle drehfest verbunden ist,
wobei der vom Lüfter (20) angesaugte Luftstrom zumindest auch die Leistungselektronik kühlt, wobei ein Gehäuseteil (6) des Antriebs einen Jochabschnitt, einen ersten Gehäuseabschnitt und einen zweiten Gehäuseabschnitt aufweist,
wobei der erste Gehäuseabschnitt vom zweiten Gehäuseabschnitt beabstandet ist und der Jochabschnitt mit dem ersten Gehäuseabschnitt verbunden ist und mit dem zweiten Gehäuseabschnitt derart verbunden ist, dass der zwischen erstem und zweitem Gehäuseabschnitt angeordnete Zwischenbereich in die Umgebungsluft mündet,
wobei der erste Gehäuseabschnitt einen Lüfter (20) zumindest teilweise gehäusebildend umgibt,
wobei der erste Gehäuseabschnitt eine als Einström-Öffnung, ausgebildete, durch die Wandung des Gehäuseabschnitts durchgehende Ausnehmung aufweist, die in den Zwischenbereich mündet.

2. Antrieb nach Anspruch 1,
**dadurch gekennzeichnet, dass**
das Verzahnungsteil bei der Herstellung durch die Öffnung (131) eingeführt ist.

3. Antrieb nach mindestens einem der vorangegangenen Ansprüche,
**dadurch gekennzeichnet, dass**
das Getriebegehäuse und das Motorgehäuse (5) dicht, verbunden sind,
wobei die Rotorwelle des Motors drehfest mit einem eintreibenden Verzahnungsteil verbunden ist und mittels eines Wellendichtrings zum Motorgehäuse (5) hin abgedichtet ausgeführt ist, wobei die Rotorwelle im Motorgehäuse (5) gelagert ist.

4. Antrieb nach mindestens einem der vorangegangenen Ansprüche,
**dadurch gekennzeichnet, dass**
das Motorgehäuse (5) einen Zentrierbund aufweist, welcher am Rand der Öffnung (131) des Getriebegehäuses zentriert ist.

5. Antrieb nach mindestens einem der vorangegangenen Ansprüche,
**dadurch gekennzeichnet, dass**
der Elektromotor zwischen dem Getriebe und der Leistungselektronik, angeordnet ist,
wobei der angesaugte Luftstrom zumindest abschnittsweise in Querrichtung zur Verbindungsrichtung des Getriebes und der Leistungselektronik verläuft entlang von Kühlrippen (17), die am die Leitungselektronik zumindest teilweise gehäusebildend umgebenden Gehäuseabschnitt eines Gehäuseteils (16) ausgeformt sind.

6. Antrieb nach mindestens einem der vorangegangenen Ansprüche,
**dadurch gekennzeichnet, dass**
das Gehäuseteil (6), umfassend den Jochabschnitt, den ersten und den zweiten Gehäuseabschnitt, einteilig, insbesondere einstückig, ausgeführt ist,

7. Antrieb nach mindestens einem der vorangegangenen Ansprüche,
**dadurch gekennzeichnet, dass**
der zweite Gehäuseabschnitt Kühlrippen (17) aufweist, die sich zumindest abschnittsweise parallel zum vom Lüfter (20) angesaugten, einströmenden Luftstrom erstrecken und/oder die an der dem ersten Gehäuseabschnitt gegenüber liegend angeordneten Seite angeordnet sind.

8. Antrieb nach mindestens einem der vorangegangenen Ansprüche,
**dadurch gekennzeichnet, dass**
der Jochabschnitt eine, zwei oder mehrere durchgehende, in den Zwischenbereich mündende Ausnehmungen aufweist.

9. Antrieb nach mindestens einem der vorangegangenen Ansprüche,
**dadurch gekennzeichnet, dass**
auf der vom ersten und zweiten Gehäuseabschnitt abgewandten Seite des Jochabschnitts ein Aufnahmeteil (1) mit dem Jochabschnitt verbunden ist, welches eine Signalelektronik aufnimmt,
insbesondere wobei der Jochabschnitt und das Aufnahmeteil (1) einstückig ausgebildet sind.

10. Antrieb nach mindestens einem der vorangegangenen Ansprüche,
**dadurch gekennzeichnet, dass**
das Motorgehäuse (5) zumindest einen Kühlkanal aufweist, der vom Lüfterraumbereich (19) zum Getriebe hin durchgeht,
wobei der Kühlkanal zumindest abschnittsweise von einem Abdeckteil begrenzt ist.

11. Antrieb nach mindestens einem der vorangegangenen Ansprüche,
**dadurch gekennzeichnet, dass**
das Motorgehäuse (5) aus Metall und das Abdeckteil aus Kunststoff gefertigt ist,

12. Antrieb nach mindestens einem der vorangegangenen Ansprüche,
**dadurch gekennzeichnet, dass**
der Kühlkanal durch einen Flanschabschnitt des Motorgehäuses (5) axial hindurchführt in einen Kühlbereich (18), der vom Abdeckteil begrenzt ist,
wobei der Flanschabschnitt mit einem entsprechenden Flanschabschnitt des ersten Gehäuseabschnitts verbunden ist.

13. Antrieb nach mindestens einem der vorangegangenen Ansprüche,
**dadurch gekennzeichnet, dass**
der Kühlkanal durch einen weiteren Flanschabschnitt des Motorgehäuses (5) führt, wobei der vom Kühlkanal austretende Luftstrom auf die äußere Oberfläche des Getriebes gerichtet ist,
wobei der weitere Flanschabschnitt des Motorgehäuses (5) mit einem entsprechenden Flanschabschnitt des Getriebegehäuses verbunden ist,
wobei der Kühlkanal durch den entsprechenden Flanschabschnitt des Getriebegehäuses geführt ist.

14. Antrieb nach mindestens einem der vorangegangenen Ansprüche,
**dadurch gekennzeichnet, dass**
das Aufnahmeteil (1) mit dem Jochabschnitt klipsverbunden ist, wobei das Aufnahmeteil (1) aus Metall und der Jochabschnitt aus Metall gefertigt ist.

15. Antrieb nach mindestens einem der vorangegangenen Ansprüche,
**dadurch gekennzeichnet, dass**
an der Innenseite des zweiten Gehäuseabschnitts eine Wärmespreizplatte (15) angeordnet ist, auf der ein Leistungshalbleiter (14) angeordnet ist.

16. Antrieb nach mindestens einem der vorangegangenen Ansprüche,
**dadurch gekennzeichnet, dass**
am Aufnahmeteil (1) eine Verstärkungsrippe (32) und eine Kabelführung (30) ausgeformt sind.

## Claims

1. A drive,
wherein the drive has a transmission driven by an electric motor,
wherein the transmission has a transmission housing in which an output shaft is rotatably mounted and has a gearing part, which is connected to the output shaft in a torsion-resistant manner, wherein the gearing part is arranged in the interior space surrounded by the transmission housing,
wherein the electric motor has a motor housing (5), wherein the motor housing (5) is connected to the transmission housing on the driving side of the transmission housing and therefore closes an opening (131) of the transmission housing,
wherein the opening (131) is the assembly opening of the transmission so that the opening (131) has an internal diameter value which exceeds the greatest diameter value of the gearing part,
wherein the drive has signal electronics and power electronics,
**characterised in that**
a fan (20) is connected to the rotor shaft in a torsion-resistant manner,
wherein the air flow sucked in by the fan (20) at least also cools the power electronics,
wherein a housing part of the drive has a yoke portion, a first housing portion and a second housing portion,
wherein the first housing portion is at a spacing from the second housing portion and the yoke portion is connected to the first housing portion and is connected to the second housing portion in such a way that the intermediate region arranged between the first and the second housing portion leads into the ambient air,
wherein the first housing portion surrounds a fan (20) to at least partially form a housing,
wherein the first housing portion has a recess which is formed as an inflow opening, runs through the wall of the housing portion and leads into the intermediate region.

2. The drive according to Claim 1,
**characterised in that**
the gearing part is introduced through the opening (131) during manufacture.

3. The drive according to at least one of the preceding claims,
**characterised in that**
the transmission housing and the motor housing (5) are tightly connected,
wherein the rotor shaft of the motor is connected to a driving gearing part in a torsion-resistant manner and is designed to be sealed towards the motor housing (5) by means of a shaft seal ring, wherein the rotor shaft is mounted in the motor housing (5).

4. The drive according to at least one of the preceding claims,
**characterised in that**
the motor housing (5) has a centring collar which is centred at the edge of the opening (131) of the transmission housing.

5. The drive according to at least one of the preceding claims,
**characterised in that**
the electric motor is arranged between the transmission and the power electronics,
wherein the sucked-in air passes, at least in sections, in the transverse direction to the connection direction of the transmission and the power electronics along cooling ribs (17) which are formed on that housing portion of a housing part (16) which surrounds the power electronics to at least partially form a housing.

6. The drive according to at least one of the preceding claims,
**characterised in that**
the housing part (6), comprising the yoke portion, the first and the second housing portion, is designed in one piece, in particular integrally.

7. The drive according to at least one of the preceding claims,
**characterised in that**
the second housing portion has cooling ribs (17), which extend, at least in sections, parallel to the inflowing air flow, which is sucked in by the fan (20), and/or which are arranged on the side lying opposite the first housing portion.

8. The drive according to at least one of the preceding claims,
**characterised in that**
the yoke portion has one, two or more continuous recesses leading into the intermediate region.

9. The drive according to at least one of the preceding claims,
**characterised in that,**
on that side of the yoke portion which is remote from the first and second housing portion, a receiving part (1), which receives signal electronics, is connected to the yoke portion,
in particular wherein the yoke portion and the receiving part (1) are integrally formed.

10. The drive according to at least one of the preceding claims,
**characterised in that**
the motor housing (5) has at least one cooling channel, which runs from the fan chamber region (19) through to the transmission,
wherein the cooling channel is delimited, at least in sections, by a cover part.

11. The drive according to at least one of the preceding claims,
**characterised in that**
the motor housing (5) is made from metal and the cover part is made from plastics material.

12. The drive according to at least one of the preceding claims,
**characterised in that**
the cooling channel is guided axially through a flange portion of the motor housing (5) into a cooling region (18) which is delimited by the cover part,
wherein the flange portion is connected to a corresponding flange portion of the first housing portion.

13. The drive according to at least one of the preceding claims,
**characterised in that**
the cooling channel leads through a further flange portion of the motor housing (5), wherein the air flow exiting the cooling channel is directed onto the outer surface of the transmission,
wherein the further flange portion of the motor housing (5) is connected to a corresponding flange portion of the transmission housing,
wherein the cooling channel is guided through the corresponding flange portion of the transmission housing.

14. The drive according to at least one of the preceding claims,
**characterised in that**
the receiving part (1) is clip-connected to the yoke portion, wherein the receiving part (1) is made from metal and the yoke portion is made from metal.

15. The drive according to at least one of the preceding claims,
**characterised in that**
a heat spreading plate (15), on which a power semiconductor (14) is arranged, is arranged on the inside of the second housing portion.

16. The drive according to at least one of the preceding claims,
**characterised in that**
a reinforcing rib (32) and a cable guide (30) are formed on the receiving part (1).

## Revendications

1. Entraînement,
lequel entraînement présente un réducteur entraîné par un moteur électrique,
le réducteur présentant un boîtier de réducteur dans lequel un arbre de sortie est monté rotatif et une partie dentée solidaire en rotation dudit arbre de sortie, la partie dentée étant disposée dans l'espace intérieur entouré par le boîtier de réducteur,
le moteur électrique présentant un boîtier de moteur (5),
le boîtier de moteur (5) étant relié au boîtier de réducteur du côté entrée du boîtier de réducteur et fermant ainsi une ouverture (131) du boîtier de réducteur,
l'ouverture (131) étant l'ouverture de montage du réducteur, de sorte que l'ouverture (131) présente une valeur de diamètre libre dépassant la plus grande valeur de diamètre de la partie dentée,
l'entraînement présentant une électronique de signalisation et une électronique de puissance,
**caractérisé en ce**
**qu'**un ventilateur (20) est solidaire en rotation de l'arbre de rotor,
le flux d'air aspiré par le ventilateur (20) refroidissant au moins aussi l'électronique de puissance,
une partie formant boîtier de l'entraînement présentant une section formant culasse, une première section formant boîtier et une deuxième section formant boîtier,
la première section formant boîtier étant espacée de la deuxième section formant boîtier et la section formant culasse étant reliée à la première section formant boîtier et étant reliée à la deuxième section formant boîtier de telle sorte que la zone intermédiaire disposée entre la première et la deuxième section formant boîtier débouche dans l'air ambiant,
la première section formant boîtier entourant au moins partiellement un ventilateur (20) à la manière d'un boîtier,
la première section formant boîtier présentant un évidement réalisé sous la forme d'une ouverture d'entrée continue à travers la paroi de la section formant boîtier, qui débouche dans la zone intermédiaire.

2. Entraînement selon la revendication 1,
**caractérisé en ce**
**que** la partie dentée est introduite à travers l'ouverture (131) lors de la fabrication.

3. Entraînement selon au moins l'une des revendications précédentes,
**caractérisé en ce**
**que** le boîtier de réducteur et le boîtier de moteur (5) sont reliés de manière étanche, l'arbre de rotor du moteur étant solidaire en rotation d'une partie dentée d'entrée et réalisé de manière étanche vers le boîtier de moteur (5) au moyen d'une bague d'étanchéité d'arbre, l'arbre de rotor étant monté dans le boîtier de moteur (5).

4. Entraînement selon au moins l'une des revendications précédentes,
**caractérisé en ce**
**que** le boîtier de moteur (5) présente une collerette de centrage qui est centrée sur le bord de l'ouverture (131) du boîtier de réducteur.

5. Entraînement selon au moins l'une des revendications précédentes,
**caractérisé en ce**
**que** le moteur électrique est disposé entre le réducteur et l'électronique de puissance,
le flux d'air aspiré s'étendant au moins sur certaines parties dans la direction transversale à la direction de liaison du réducteur et de l'électronique de puissance le long d'ailettes de refroidissement (17) qui sont formées sur la section formant boîtier d'une partie formant boîtier (16) qui entoure au moins partiellement l'électronique de puissance à la manière d'un boîtier.

6. Entraînement selon au moins l'une des revendications précédentes,
**caractérisé en ce**
**que** la partie formant boîtier (6), comprenant la section formant culasse, la première et la deuxième section formant boîtier, est réalisée en une seule partie, en particulier d'un seul tenant.

7. Entraînement selon au moins l'une des revendications précédentes,
**caractérisé en ce**
**que** la deuxième section formant boîtier présente des ailettes de refroidissement (17) qui s'étendent au moins sur certaines parties parallèlement au flux d'air entrant aspiré par le ventilateur (20) et/ou qui sont disposées du côté opposé à la première section formant boîtier.

8. Entraînement selon au moins l'une des revendications précédentes,
**caractérisé en ce**
**que** la section formant culasse présente un, deux ou plusieurs évidements continus débouchant dans la zone intermédiaire.

9. Entraînement selon au moins l'une des revendications précédentes,
**caractérisé en ce**
**que** du côté de la section formant culasse éloigné de la première et de la deuxième section formant boîtier, une partie de réception (1) qui reçoit une électronique de signalisation est reliée à la section formant culasse,
la section formant culasse et la partie de réception (1) étant en particulier formées d'un seul tenant.

10. Entraînement selon au moins l'une des revendications précédentes,
**caractérisé en ce**
**que** le boîtier de moteur (5) présente au moins un canal de refroidissement qui s'étend de la zone d'espace de ventilateur (19) vers le réducteur,
le canal de refroidissement étant délimité au moins sur certaines parties par une partie de recouvrement.

11. Entraînement selon au moins l'une des revendications précédentes,
**caractérisé en ce**
**que** le boîtier de moteur (5) est réalisé en métal et la partie de recouvrement en matière plastique.

12. Entraînement selon au moins l'une des revendications précédentes,
**caractérisé en ce**
**que** le canal de refroidissement passe axialement à travers une section formant bride du boîtier de moteur (5) dans une zone de refroidissement (18) qui est délimitée par la partie de recouvrement,
la section formant bride étant reliée à une section formant bride correspondante de la première section formant boîtier.

13. Entraînement selon au moins l'une des revendications précédentes,
**caractérisé en ce**
**que** le canal de refroidissement passe à travers une autre section formant bride du boîtier de moteur (5), le flux d'air sortant du canal de refroidissement étant dirigé vers la surface extérieure du réducteur,
l'autre section formant bride du boîtier de moteur (5) étant reliée à une section formant bride correspondante du boîtier de réducteur,
le canal de refroidissement passant à travers la section formant bride correspondante du boîtier de réducteur.

14. Entraînement selon au moins l'une des revendications précédentes,
**caractérisé en ce**
**que** la partie de réception (1) est reliée par clipsage à la section formant culasse, la partie de réception (1) étant réalisée en métal et la section formant culasse en métal.

15. Entraînement selon au moins l'une des revendications précédentes,
**caractérisé en ce**
**qu'**une plaque de dissipation thermique (15) sur laquelle est disposé un semi-conducteur de puissance (14) est disposée sur le côté intérieur de la deuxième section formant boîtier.

16. Entraînement selon au moins l'une des revendications précédentes,
**caractérisé en ce**
**qu'**une nervure de renforcement (32) et un guide de câble (30) sont formés sur la partie de réception (1).
